# EUROPEAN PATENT APPLICATION

(11) **EP 4 847 887 A1**
(43) Date of publication of application: **02.12.2026**
(21) Application number: 26179459.8
(22) Date of filing: 19.05.2026
(51) Int. Cl.: G01F 1/84, G01F 1/74, G01F 25/10

(54) **MEASUREMENT DEVICE AND MEASUREMENT PROGRAM**

(30) Priority: 30.05.2025 JP 2025090368
(71) Applicant: Yokogawa Electric Corporation, Musashino-shi, Tokyo 180-8750 (JP)
(72) Inventor: ISHINABE, Atsushi, Musashino-shi, Tokyo, 180-8750 (JP); ISHIKAWA, Ikuhiko, Musashino-shi, Tokyo, 180-8750 (JP)
(74) Representative: Winter, Brandl - Partnerschaft mbB

(57) **Abstract**

A memory (300c) and a processor (300d) are included, and the processor (300d) executes a process of generating (38) a trained physical constraint model (L3') that has been trained by adding a physical constraint related to a measurement of a measurement target fluid, a process of determining (35) a flow pattern of the measurement target fluid, and a process of performing (36) arithmetic processing on an output value that corresponds to the determined flow pattern, that is related to the measurement target fluid, and that is obtained from a sensor value indicated by a measurement device by using a trained physical constraint regression model (L20) that includes at least the trained physical constraint model (L3 ').

## Description

### Field

The present invention relates a measurement device and a measurement program.

### BACKGROUND

Conventionally, there is a known technology related to a field device for measuring an output value that indicates a state of a fluid including a flow rate, a density, and the like of the fluid. For example, Japanese Patent No. 6608396 (Patent Document 1) discloses a field device that measures a quantity of state of a fluid and that is able to acquire a further accurate measurement value even when a slug flow has occurred.

However, in the conventional technology, in a case where a tramp material, such as an air bubble, is mixed into the fluid, it is difficult to accurately measure the output value, and an error may possibly occur in a measurement value of the output value. The field device described in Patent Document 1 is used to solve such a problem. However, the field device is applicable to a fluid that takes substantially a constant value as the output value at the time at which no tramp material is mixed, but, for example, it has been difficult to apply the field device to a fluid whose output values vary over time, that is, the state of air bubbles changes over time, due to an operation, such as a distillation process.

It is conceivable to use a trained model in order to accurately measure the output values that are related to the fluid and that change over time. However, even when the trained model is used, if a flow pattern of the fluid passing through a measurement tube changes, regression using the trained model does not function, accuracy of the output value is deteriorated.

An object of the present disclosure is to suppress degradation in accuracy of an output value from a trained model in a case where a flow pattern of a measurement target fluid has been changed.

### SUMMARY OF THE INVENTION

It is an object of the present invention to at least partially solve the problems in the conventional technology.

According to an aspect of the embodiments, a measurement device including a memory; and a processor, wherein the processor executes a process of generating a trained physical constraint model that has been trained by adding a physical constraint related to a measurement of a measurement target fluid, determining a flow pattern of the measurement target fluid, and performing arithmetic processing on an output value that corresponds to the determined flow pattern, that is related to the measurement target fluid, and that is obtained from a sensor value indicated by a measurement device by using a trained physical constraint regression model that includes at least the trained physical constraint model.

According to an aspect of the embodiments, a measurement program that causes a computer to execute a process including generating a trained physical constraint model that has been trained by adding a physical constraint related to a measurement of a measurement target fluid, determining a flow pattern of the measurement target fluid, and performing an arithmetic operation on an output value that corresponds to the determined flow pattern, that is related to the measurement target fluid, and that is obtained from a sensor value indicated by a measurement device by using a trained physical constraint regression model that includes at least the trained physical constraint model.

### BRIEF DESCRIPTION OF THE DRAWINGS

FIG. 1 is a block diagram illustrating a schematic configuration of a field device according to a first embodiment of the present disclosure;
FIG. 2 is a schematic diagram for explaining an outline of each of a regression process and a determination process performed in an arithmetic section;
FIG. 3 is a schematic diagram for explaining one example of a regression process that is performed by using a trained regression model;
FIG. 4 is a schematic diagram for explaining one example of a determination process that is performed by using a trained discriminative model;
FIG. 5 is a schematic diagram for explaining a training of a trained physical constraint model;
FIG. 6 is a schematic diagram for explaining a generation process of a trained physical constraint regression model including the trained physical constraint model;
FIG. 7 is a diagram illustrating a modification of the trained physical constraint model;
FIG. 8 is a flowchart for explaining a first operation example of a field device;
FIG. 9 is a flowchart for explaining a second operation of example the field device;
FIG. 10 is a schematic diagram for explaining a third operation example of the field device;
FIG. 11 is a schematic diagram for explaining the third operation example of the field device;
FIG. 12 is a schematic diagram for explaining a fourth operation example of the field device;
FIG. 13 is a block diagram illustrating a schematic configuration of a field device according to a second embodiment of the present disclosure; and
FIG. 14 is a diagram illustrating an example of a hardware configuration.

### DETAILED DESCRIPTION OF THE PREFERRED EMBODIMENTS

At the beginning, a background of and a problem in the conventional technology will be described in more detail.

In a measurement device, such as a field device, in a case where a tramp material, such as an air bubble, is mixed into a fluid corresponding to a measurement target, it is difficult to accurately measure an output value that indicates a state including a flow rate, a density, or the like of the fluid. For example, an error may possibly occur in a measurement value of an output value.

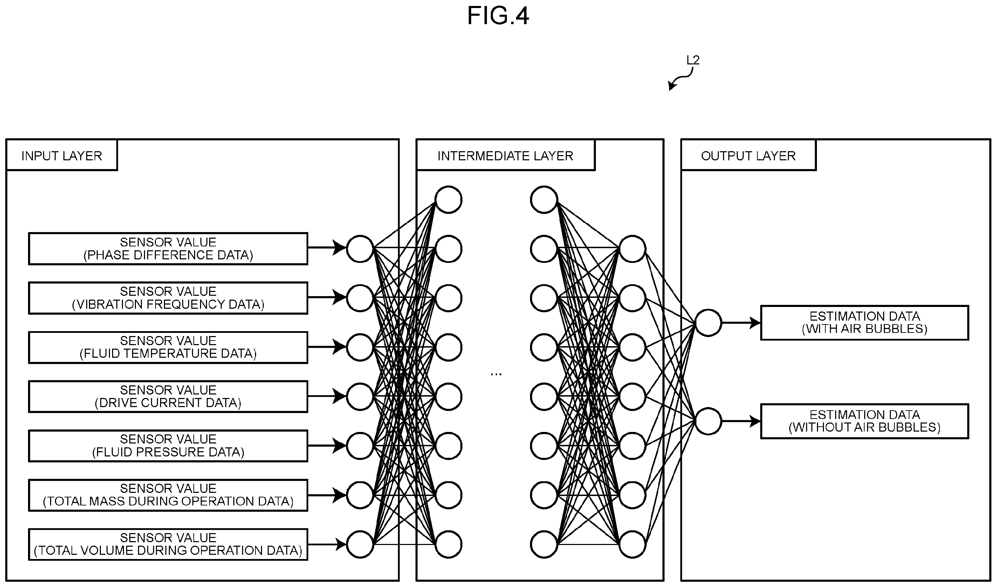

For example, in Patent Document 1, a Coriolis flowmeter is exemplified as the field device. In the Coriolis flowmeter, for example, in a case where an air bubble corresponding to a tramp material is mixed into a fluid, the measurement value of the output value including the density or the like of the fluid is affected as a result of the air bubble being mixed into the fluid. At this time, as illustrated in FIG. 4 in Patent Document 1, regarding the measurement value of the output value, a value that is lower than the actual value obtained at the time at which no air bubble is mixed is consequently obtained. As a result of this, it is assumed that an error between the measurement value and the actual value becomes large.

In the field device described in Patent Document 1, in order to solve this kind of problem, a drive current value of a Coriolis flowmeter, referred to as a "Drive Current", is used as a threshold for determining whether or not a slug flow, or the like has occurred. In general, a hysteresis is applied to the threshold at this time. Due to the above, a method of determining whether or not an air bubble has been mixed into the fluid, and correcting a measurement value at the time at which the air bubble has been mixed into the fluid on the basis of a normal output value obtained at the time at which no air bubble is mixed is used.

However, the field device described in Patent Document 1 is applicable to a fluid that takes substantially a constant value as the output value at the time at which no tramp material is mixed, but, for example, it has been difficult to apply the field device to a fluid whose output values change over time due to an operation, such as a distillation process. Furthermore, it is difficult to perform an accurate correction depending on a condition including a type and an amount of small air bubbles, such as microbubbles, and a period of time indicated when air bubbles continue to enter for a long time, or the like.

Accordingly, in order to solve the above described problems, an object of the present disclosure is to suppress degradation in accuracy of an output value from a trained model in a case where a flow pattern of a measurement target fluid has been changed.

In the following, one embodiment of the present disclosure will be described with reference to the accompanying drawings.

### First Embodiment

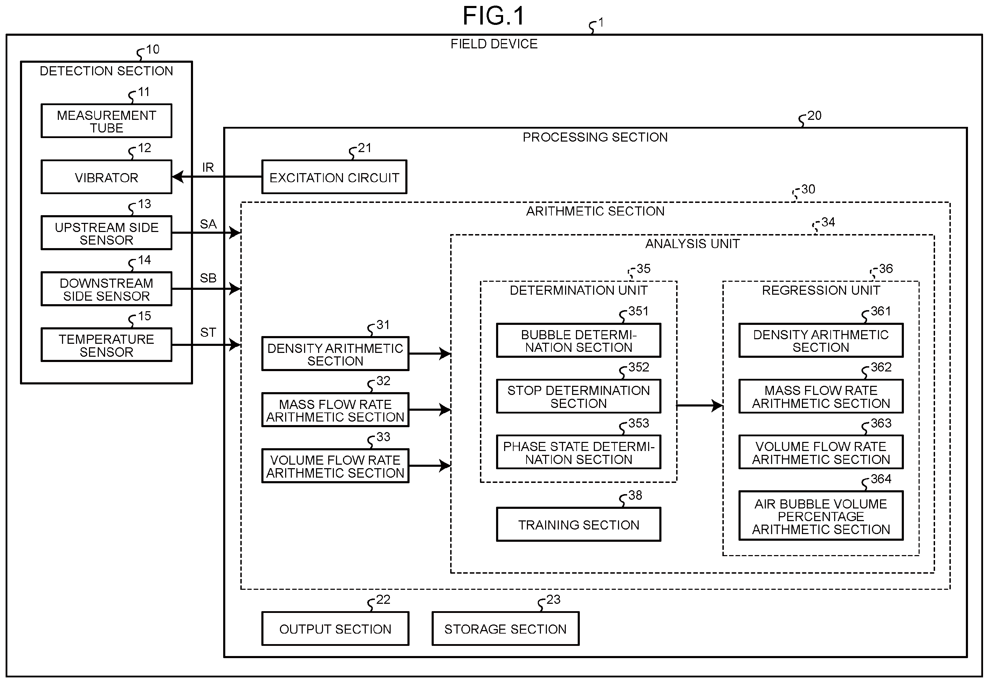

FIG. 1 is a block diagram illustrating a schematic configuration of a field device 1 according to a first embodiment of the present disclosure. A configuration and a function of the field device 1 according to the first embodiment will be described with reference to FIG. 1.

The field device 1 may also be referred to as, for example, a measurement device. In the present disclosure, the "field device" includes an arbitrary device that acquires a measurement value by performing a measurement process of measuring a physical amount corresponding to an object to be measured. In the present disclosure, a "physical amount" includes, for example, a temperature, a pressure, a flow rate, and a PH of a fluid including gas, a liquid, and the like generated in a plant facility in which the field device is arranged, and includes a degree of corrosion, a vibration amount, and the like of the plant facility. The physical amount is not limited to these examples, and the physical amount includes a state output value including a temperature, a pressure, and the like related to an actuator including a valve, a motor, a relay, and the like.

In the present disclosure, the plant facility includes, for example, a plant that manages and controls a wellhead including a gas field, an oil field, and the like, and the surrounding area of the wellhead, in addition to an industrial plant, such as a chemical plant. In addition, the plant facility may include a plant that manages and controls power generation of hydroelectric generation, thermal generation, nuclear power generation, and the like, a plant that manages and controls energy harvesting using solar power, wind energy, and the like, a plant that manages and controls water supply, sewerage, a dam, and the like.

For example, the field device 1 includes an arbitrary device that measures at least one type of an output value that indicates a state of a fluid. In the present disclosure, the "fluid" includes, for example, slug of gas, a liquid, a solid, and the like. The "output value" includes, for example, at least one type of a density, a volume flow rate, a mass flow rate, and an air bubble volume percentage of a fluid. The "air bubble volume percentage" means, for example, a ratio of a gas component contained in the fluid. The ratio of the gas component is based on a weight standard or a volume standard. The field device 1 measures, for example, a flow rate of a fluid flowing through an interior of a pipe. The field device 1 includes, for example, a Coriolis flowmeter. The Coriolis flowmeter is one example of the field device 1. The field device 1 includes a detection section 10, a processing section 20, and an arithmetic section 30 that is included in the processing section 20.

The detection section 10 vibrates a measurement tube 11 through which the fluid corresponding to a measurement target flows, and detects a vibration of the measurement tube 11 generated in the upstream and downstream of the measurement tube 11 and detects a temperature of the measurement tube 11. The detection section 10 includes, in addition to the measurement tube 11, a vibrator 12, an upstream side sensor 13, a downstream side sensor 14, and a temperature sensor 15.

The measurement tube 11 includes, for example, the one that is formed in a straight tube type and both ends thereof are fixed and supported by supporting members. The measurement tube 11 is not limited to this example, and, for example, may include the one that is formed in another shape, such as U-shaped tube.

The vibrator 12 includes an arbitrary vibration module that mechanically vibrates the measurement tube 11 up and down. The vibrator 12 is provided around the measurement tube 11 through which the fluid flows. For example, the vibrator 12 is installed in the vicinity of the central part of the measurement tube 11. The vibrator 12 is electrically connected to the processing section 20.

The upstream side sensor 13 includes an arbitrary sensor that is able to detect a vibration of the measurement tube 11 generated by the vibrator 12. The upstream side sensor 13 is fixed on a side on which the fluid flows into the measurement tube 11, that is, at a position closer to an upstream side than the vicinity of the central part of the measurement tube 11 in which the vibrator 12 is installed.

The downstream side sensor 14 includes an arbitrary sensor that is able to detect a vibration of the measurement tube 11 generated by the vibrator 12. The downstream side sensor 14 is fixed on a side on which the fluid flow out from the measurement tube 11, that is, at a position closer to a downstream side than the vicinity of the central part of the measurement tube 11 in which the vibrator 12 is installed.

Each of the upstream side sensor 13 and the downstream side sensor 14 is electrically connected to the arithmetic section 30 included in the processing section 20.

The temperature sensor 15 includes an arbitrary sensor that is able to measure a surface temperature of the measurement tube 11. The temperature sensor 15 is, for example, fixed on an outer surface of the measurement tube 11 at a position closer to the downstream side than the vicinity of the central part of the measurement tube 11 in which the vibrator 12 is installed. The temperature sensor 15 is fixed at a position in the vicinity of the downstream side sensor 14. The temperature sensor 15 is electrically connected to the arithmetic section 30 included in the processing section 20. The temperature sensor 15 is used to reduce a measurement error of the output value caused by a temperature variation.

An operation of the detection section 10 that has been configured as described above will be described.

The vibrator 12 vibrates the measurement tube 11 in a predetermined vibration mode in accordance with a drive current IR that is output from the processing section 20. For example, the vibrator 12 vibrates the measurement tube 11 in a first-order vibration mode in which a node of the vibration appears only at both ends of the measurement tube 11 that is fixed and supported by the supporting members.

When the fluid corresponding to the measurement target flows through the measurement tube 11 in a state in which a vibration is applied to the measurement tube 11 by the vibrator 12 in the first-order vibration mode, the measurement tube 11 vibrates in a second-order vibration mode in which a node of the vibration appears both ends of the measurement tube 11 that is fixed and supported by the supporting member and also appears at a midpoint position of the measurement tube 11. In practice, the measurement tube 11 may vibrate in a vibration mode in which two types of vibration modes of the first-order vibration mode and the second-order vibration mode are superimposed.

The upstream side sensor 13 measures an amount of displacement of the upstream side of the measurement tube 11 that is vibrating in the above described vibration mode. The upstream side sensor 13 outputs the measured amount of displacement as a displacement signal SA to the arithmetic section 30 included in the processing section 20. The downstream side sensor 14 measures an amount of displacement of the downstream side of the measurement tube 11 that is vibrating in the above described vibration mode. The downstream side sensor 14 outputs the measured amount of displacement as a displacement signal SB to the arithmetic section 30 included in the processing section 20.

The temperature sensor 15 measures the surface temperature of the measurement tube 11 on the outer surface of the measurement tube 11 at a position located on the downstream side. The temperature sensor 15 outputs the measured surface temperature of the measurement tube 11 as a temperature signal ST to the arithmetic section 30 included in the processing section 20.

The processing section 20 includes, in addition to the arithmetic section 30, an excitation circuit 21, an output section 22, and a storage section 23. The arithmetic section 30 includes a density arithmetic section 31, a mass flow rate arithmetic section 32, a volume flow rate arithmetic section 33, and an analysis unit 34. The analysis unit 34 further includes a determination unit 35, a regression unit 36, and a training section 38. The determination unit 35 includes an air bubble determination section 351, a stop determination section 352, and a phase state determination section 353. The regression unit 36 includes a density arithmetic section 361, a mass flow rate arithmetic section 362, a volume flow rate arithmetic section 363, and an air bubble volume percentage arithmetic section 364.

The excitation circuit 21 is connected to the vibrator 12. The excitation circuit 21 drives the vibrator 12 in, for example a sine wave pattern by outputting the drive current IR according to the displacement signal SA to the vibrator 12. The excitation circuit 21 may drive the vibrator 12 in, for example the sine wave pattern by outputting the drive current IR according to the displacement signal SB instead of the displacement signal SA to the vibrator 12.

The output section 22 includes an arbitrary output interface that notifies a user of the field device 1 of information by outputting the information. The output interface includes, for example, a display that outputs information by using a video image, a speaker that outputs information by a voice, and the like. The display includes, for example, a liquid crystal display, an organic Electro Luminescent (EL) display, or the like.

The storage section 23 includes an arbitrary storage module including a hard disk drive (HDD), a solid state drive (SSD), an electrically erasable programmable read only memory (EEPROM) (registered trademark), a read only memory (ROM), a random access memory (RAM), and the like. The storage section 23 functions as, for example, a main storage device, an auxiliary storage device, or a cache memory. The storage section 23 need not always include the above described storage module that is installed in the field device 1, and may include a storage module with an external type connected by a digital input/output port, such as an universal serial bus (USB). The storage section 23 stores therein arbitrary information that is used for an operation of the field device 1.

The arithmetic section 30 includes one or more processors. In the present disclosure, the "processor" is, for example, a general-purpose processor or a dedicated processor specialized for a specific process, but the processor is not limited to these examples. The arithmetic section 30 performs various kinds of arithmetic processing needed for the operation of the field device 1.

The arithmetic section 30 measures a vibration frequency of the measurement tube 11 on the basis of at least one of the displacement signals SA and SB that is output from the detection section 10. The density arithmetic section 31 included in the arithmetic section 30 calculates, on the basis of the measured vibration frequency, a mass, that is, a density, of the fluid corresponding to the measurement target. The mass flow rate arithmetic section 32 included in the arithmetic section 30 calculates a mass flow rate of the fluid flowing through the measurement tube 11 on the basis of a phase difference between the displacement signals SA and SB that are output from the detection section 10. The volume flow rate arithmetic section 33 included in the arithmetic section 30 calculates a volume flow rate of the fluid flowing through the measurement tube 11 by dividing the mass flow rate that has been calculated by the mass flow rate arithmetic section 32 by the density that has been calculated by the density arithmetic section 31.

The detection section 10 is used to acquire, as data, at least one type of a sensor value that is needed to calculate the output value as described above performed by the arithmetic section 30. The arithmetic section 30 calculates the output value on the basis of the data that has been acquired by using the detection section 10. In the present disclosure, the "data" includes, for example, at least one type of phase difference data, vibration frequency data, fluid temperature data, drive current data, fluid pressure data, total mass during operation data, and total volume during operation data.

The phase difference data is data in which the phase difference between the displacement signals SA and SB that are output from the respective upstream side sensor 13 and the downstream side sensor 14 that are included in the detection section 10 is used as the sensor value. The vibration frequency data is data in which the vibration frequency that is related to the measurement tube 11 and that has been measured on the basis of at least one of the displacement signals SA and SB that is output from the respective upstream side sensor 13 and the downstream side sensor 14 that are included in the detection section 10 is used as the sensor value.

The fluid temperature data is data in which the temperature that is related to the measurement tube 11 and that has been measured on the basis of the temperature signal ST that is output from the temperature sensor 15 included in the detection section 10 is used as the sensor value. The drive current data is data in which the drive current IR that is output from the excitation circuit 21 in order to operate the vibrator 12 included in the detection section 10 is used as the sensor value.

The fluid pressure data is data in which the pressure that is obtained by inputting the measurement value of a pressure meter that is installed separately from the field device 1 or that is set by a fixed value in an interior of the arithmetic section 30 is used as the sensor value. The total mass during operation data is data in which the total mass of the fluid that flows through the measurement tube 11 during the operation of the field device 1 and that has been measured on the basis of the displacement signals SA and SB that are output from the respective upstream side sensor 13 and the downstream side sensor 14 that are included in the detection section 10 is used as the sensor value. The total volume during operation data is data in which the total volume of the fluid that flows through the measurement tube 11 during the operation of the field device 1 and that has been measured on the basis of the displacement signals SA and SB that are output from the respective upstream side sensor 13 and the downstream side sensor 14 that are included in the detection section 10 is used as the sensor value.

The analysis unit 34 included in the arithmetic section 30 acquires at least one of the results of the regression process and the determination process related to the output values. The regression process and the determination process are performed by using a trained regression model and a trained discriminative model that have been subjected to machine training in advance on the basis of the data indicated when a tramp material has been mixed into the fluid and are performed by using the data that has been acquired by using the detection section 10. The arithmetic section 30 acquires the subject result by performing at least one of the regression process and the determination process. The analysis unit 34 regresses the value needed for the measurement value of the output value when it is detected that the tramp material has been mixed into the fluid, on the basis of the trained regression model and the trained discriminative model that have been built in advance, and then outputs the output value.

In the present disclosure, the "tramp material" includes, for example, an air bubble. In the following, a description will be given under the assumption that the tramp material is an air bubble, but the tramp material is not limited to this example. The tramp material may include, for example, an arbitrary foreign material that affects the measurement value of the output value obtained by the field device 1. The same also applies to the foreign material.

In the present disclosure, the "regression process" related to the output value includes, for example, a process of regressing a value needed as the measurement value of the output value on the basis of the trained regression model that has been built in advance performed in a case where the measurement value of the output value indicates an abnormal state as a result of an air bubble being mixed into the fluid. The "determination process" related to the output value includes, for example, a process of determining whether or not an air bubble has been mixed into the fluid, a process of determining whether or not an operation of the field device 1 has stopped, a process of determining the phase state of the fluid that serves as the measurement target, or the like. The determination process may be performed by using a trained discriminative model.

In the present disclosure, the "phase state" indicates, for example, the total number of a gas phase and a liquid phase in a multiphase flow included in the fluid composed of two or more types of mixed components including gas and a liquid. For example, when an air bubble is mixed into a fluid that is composed of two components and that is separated by the liquid phase included in a multiphase flow, the phase state enters three. The determination of the phase state is also the determination of the flow pattern. The flow pattern indicates, in addition to a two-phase flow, such as an air bubble flow, a slug flow, a mist flow, an annular flow, and an annular mist flow, a multiphase flow of fluids each having a different chemical property.

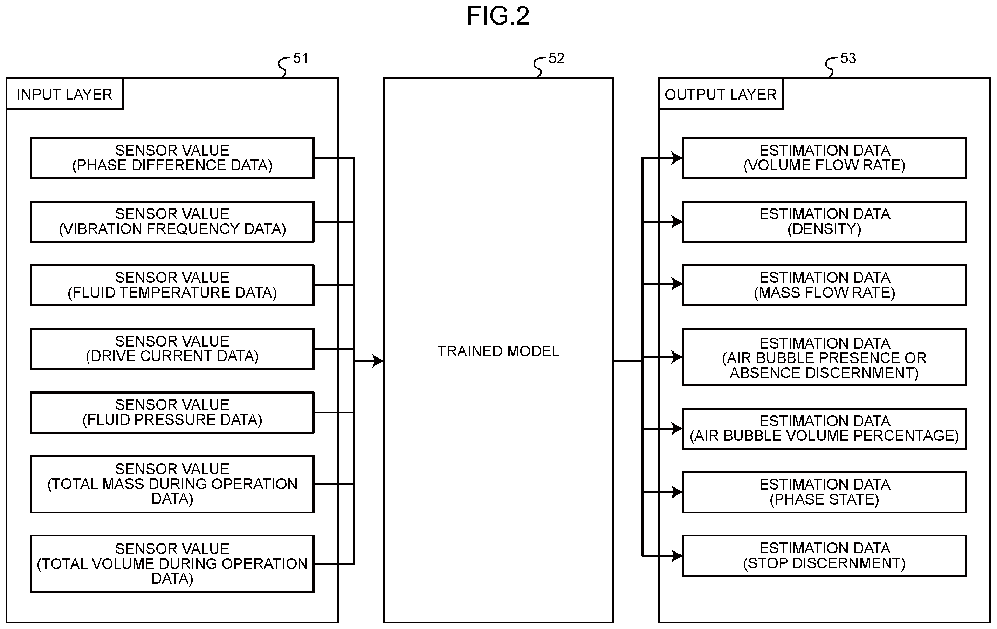

FIG. 2 is a schematic diagram for explaining an outline of each of the regression process and the determination process performed by the arithmetic section 30 illustrated in FIG. 1. FIG. 2 indicates the outline of the processes performed by using the trained model. A trained model 52 is a trained regression model that performs the regression process and a trained discriminative model that performs a determination process.

The trained regression model is built by using a model that outputs a regression result obtained by a multiple regression analysis, a neural network, a support vector regression, a Gaussian process regression, a regression tree, a logistic regression, an autoregressive model, or the like. The trained discriminative model is built by using a model that outputs a classification result obtained by using logistic regression, a neural network, a support vector machine, a classification tree, change point detection, a k-nearest neighbor algorithm, s k-means clustering algorithm, or the like. In the present disclosure, the "neural network" includes, for example, a neural network characterized by having a structure of a multi-layer perceptron (MLP) including a neural network (NN), a convolutional neural network (CNN), a graph neural network (GNN), a recurrent neural network (RNN), a long short-term memory type neural network (LSTM), and a self-attention mechanism neural network (Transformer).

An input layer 51 uses at least one type of the sensor value that is obtained in the interior of the field device 1. The field device 1 is, for example, a Coriolis flowmeter. For example, the sensor value that is used by the input layer 51 is the sensor value that is included in the above described data. More specifically, the sensor value is included in the phase difference data, the vibration frequency data, the fluid temperature data, the drive current data, the fluid pressure data, the total mass during operation data, and the total volume during operation data.

An output layer 53 uses at least one type of estimation data related to the output value that is output from the field device 1 and estimation data related to the determination process. For example, the estimation data that is used by the output layer 53 is the estimation data that is related to a volume flow rate, a density of the fluid, a mass flow rate, and the air bubble volume percentage. For example, the estimation data that is used by the output layer 53 is the estimation data that is related to determining whether or not an air bubble has been mixed into a fluid, determining the phase state of the fluid corresponding to the measurement target, and determining whether or not an operation of the field device 1 has been stopped.

The analysis unit 34 included in the arithmetic section 30 builds in advance the trained model 52 by performing a training by using the data and the label at the time at which an air bubble has been mixed into the fluid as a tramp material. Moreover, the training includes supervised learning, unsupervised learning, semi-supervised learning, and the like. In the first embodiment, it is assumed that the trained model 52 is built from the supervised learning. Furthermore, the supervised data serving as the label that is used to build the trained model 52 includes, for example, time series data that is obtained with respect to at least one type of the output value at the time at which the air bubble has been mixed into the fluid. The time series data is continuous data that also includes the time at which the air bubble has been mixed into the fluid. It is assumed that the supervised data is, for example, time series data in which a state of the fluid is recorded as a photograph or a moving image by using an image capturing device, such as a camera, and continuous labels obtained at the corresponding time at which the mixing of the air bubble has been recognized. The analysis unit 34 builds the trained model 52 by using, as feature values, a chronological accumulation amount that is obtained from the data that has been acquired by using the detection section 10 included in the field device 1 and the feature values of the acquired data.

The supervised data of the trained regression model is obtained by using, for example, a measurement device, such as a level meter, a weight scale, and a density meter, a measurement method performed by visually, or the like. In general, a relational expression of volume flow rate = mass flow rate / density holds. Therefore, if the supervised data related to at least two types of the volume flow rate, the mass flow rate, and the density has been prepared, it is possible to indirectly obtain the supervised data related to the remaining one type. The analysis unit 34 performs an evaluation of regression from the data related to various kinds of sensor values on the basis of the obtained supervised data.

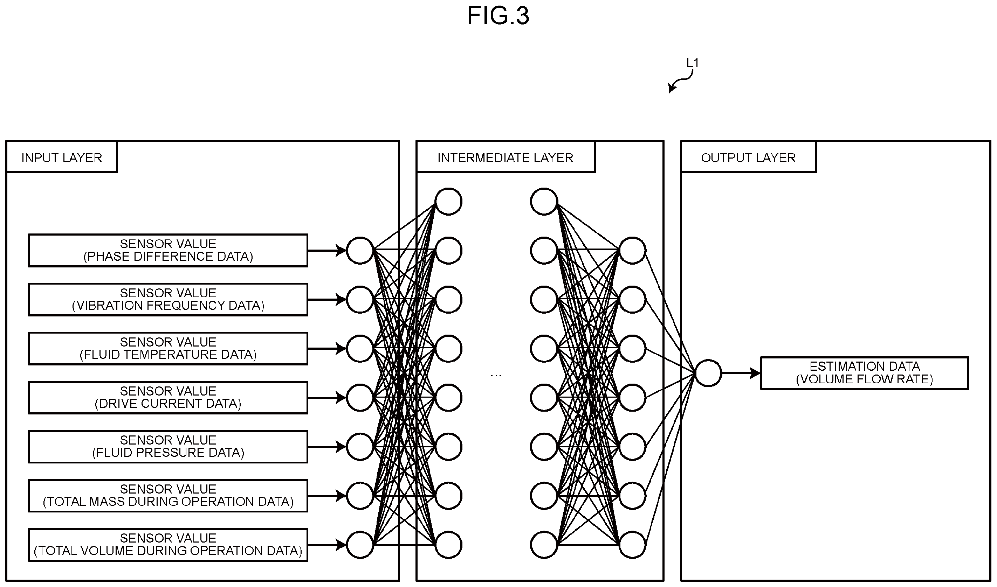

FIG. 3 is a schematic diagram for explaining one example of the regression process that is performed by using a trained regression model L1. FIG. 3 indicates, as one example, the trained regression model L1 as a neural network at the time of the regression process. FIG. 4 is a schematic diagram for explaining one example of the determination process that is performed by using a trained discriminative model L2. FIG. 4 illustrates, as one example, the trained discriminative model L2 as the neural network at the time of the determination process in which the number of classes is two.

The analysis unit 34 included in the arithmetic section 30 acquires the result obtained when each of the regression process and the determination process has been performed by using a different trained model. In other words, the analysis unit 34 uses trained models that are formed independently of each other for the regression process and the determination process. The analysis unit 34 uses, as one example, the same trained regression model L1 with respect to the output value of different types in the regression process. The analysis unit 34 uses, as one example, the same trained discriminative model L2 with respect to determination of the different types in the determination process.

The analysis unit 34 is able to set an arbitrary number of layers and an arbitrary number of neurons in the intermediate layer. The analysis unit 34 sets, as an activating function, a general nonlinear function, such as a ramp function, a sigmoid function, and a hyperbolic tangent function. The analysis unit 34 sets a softmax function to the output layer at the time of multiclass classification on the basis of the perspective of an error backpropagation method.

The regression unit 36 included in the analysis unit 34 performs the regression process of a density, a mass flow rate, a volume flow rate, an air bubble volume percentage, and the like of the fluid on the basis of the trained regression model L1 by using the obtained sensor values. FIG. 3 illustrates, as one example, the regression process performed on the volume flow rate by the volume flow rate arithmetic section 363.

The density arithmetic section 361 performs the regression process on the density of the fluid. For example, the density arithmetic section 361 uses a logistic regression model that uses one or a plurality of a total mass during operation, a total volume during operation, and a fluid temperature from among the sensor values in the regression process to be performed on the density of the fluid.

The mass flow rate arithmetic section 362 performs the regression process on the mass flow rate. For example, the mass flow rate arithmetic section 362 uses a linear regression model that uses a phase difference, a fluid temperature, a drive current, a fluid density before the regression process, and a total volume during operation from among the sensor values in the regression process to be performed on the mass flow rate.

The volume flow rate arithmetic section 363 performs the regression process on the volume flow rate. For example, the volume flow rate arithmetic section 363 uses the linear regression model that uses the phase difference, the fluid temperature, the drive current, the fluid density before the regression process, and the total mass during operation from among the sensor value in the regression process to be performed on the volume flow rate.

The air bubble volume percentage arithmetic section 364 performs the regression process on the air bubble volume percentage. For example, the air bubble volume percentage arithmetic section 364 uses the linear regression model that uses the phase difference, the fluid temperature, the drive current, the fluid density before the regression process, the total mass during operation, and the total volume during operation from among the sensor values in the regression process to be performed on the air bubble volume percentage.

The determination unit 35 included in the analysis unit 34 performs the determination process of determining whether or not an air bubble has been mixed, determining an operation stoppage, determining a phase state (flow pattern), and the like in the trained discriminative model L2 by using the obtained sensor values. FIG. 4 illustrates, as one example, the determination process of determining whether or not an air bubble has been mixed performed by the air bubble determination section 351.

The air bubble determination section 351 performs the determination process of determining whether or not an air bubble has been mixed. For example, the air bubble determination section 351 uses change point detection that uses a phase difference among the sensor values in the determination process of determining whether or not an air bubble has been mixed.

The stop determination section 352 performs the determination process of determining the operation stoppage. For example, the stop determination section 352 uses a phase difference, a fluid temperature, a drive current, a fluid density before the regression process, a total mass during operation, and a total volume during operation from among the sensor values in the determination process to be performed on the operation stoppage.

The phase state determination section 353 performs the determination process on the phase state. For example, the phase state determination section 353 uses the phase difference, the fluid temperature, the drive current, the fluid density before the regression process, the total mass during operation, and the total volume during operation from among the sensor values in the determination process to be performed on the phase state.

### Generation of trained physical constraint model

In the meantime, as described above, in a case where the flow pattern of the measurement target fluid has changed, this is highly likely to affect the output value accuracy of the trained model. Accordingly, in the first embodiment, the training section 38 is provided in the analysis unit 34. The training section 38 generates a trained physical constraint model that has been trained by adding physical constraint related to the measurement of the measurement target fluid, and generates a trained physical constraint regression model that conforms to the determined flow pattern, and that includes at least the trained physical constraint model. In the first embodiment, this trained physical constraint regression model is used as the trained regression model L1.

First, in the Coriolis flowmeter, by applying vibrations to the measurement tube, inertia of the fluid adds torsion to the tube due to the vibrations. The mass flow rate is measured by sensing this torsion. This transfer function is represented as Equation (1) below. $M \frac{{d}^{2} {X}_{c}}{d {t}^{2}} + D \frac{d {X}_{c}}{dt} + K {X}_{c} = F$ (1)

Equation (1) is an equation of motion (physical equation) for a displacement Xc of the exciting measurement tube. M denotes the total mass (including a U-shaped tube and a fluid) of the U-shaped tube, D denotes a damping coefficient, K denotes a spring constant, and F denotes a force applied from the excitation coil.

The damping coefficient D is represented by Equation (2) below by using an angular frequency ω, and an attenuation coefficient ζ. $D = 2 ζω M$ (2)

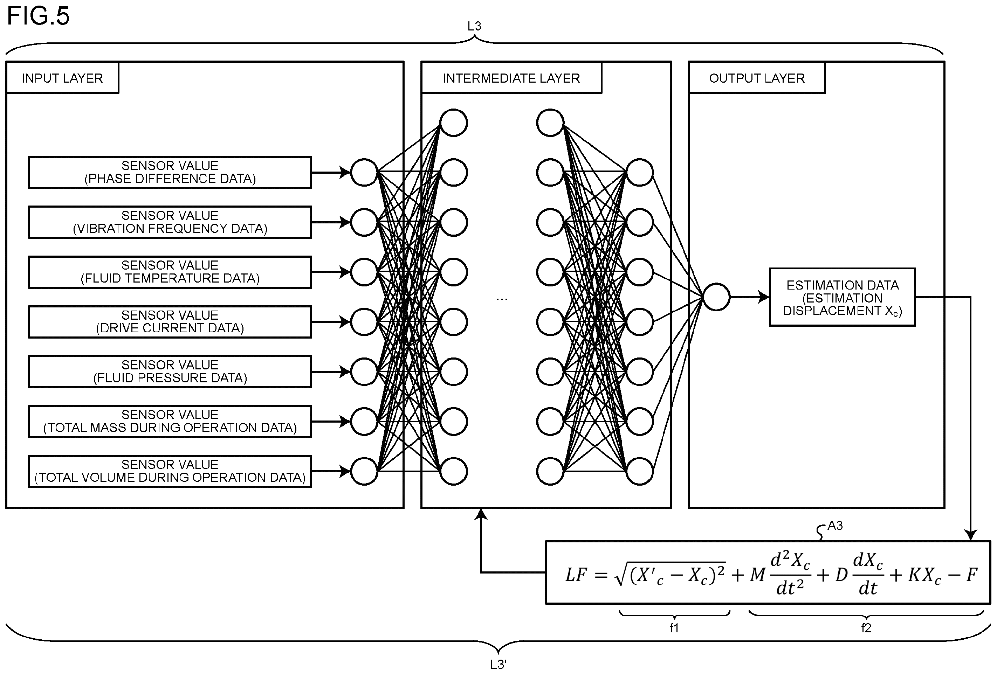

FIG. 5 is a schematic diagram for explaining a training of a trained physical constraint model L3'. Equation (1) is a physical equation that governs the sensor characteristic, and, as illustrated in FIG. 5, performs a training by applying the physical equation related to a force F that excites the measurement tube of the Coriolis flowmeter to the neural network in a trained regression model L3 that uses estimation data as an estimation displacement Xc.

In other words, an arithmetic layer A3 uses the estimation displacement Xc indicated by Equation (1) as an output layer and applies the physical equation (Equation (1)) that is a partial differential equation with respect to time and spatial variables to the obtained output layer. The arithmetic layer A3 converts Equation (1) to an implicit function, and add an implicit function term f2 to an error function term f1 as a loss function LF. In other words, the loss function LF is expressed as follows: $\begin{matrix}LF = f 1 + f 2 \\ = {\left\{\left(Xc′\right.-{\left.Xc\right\}}_{.}^{2}\right\}}^{1 / 2} \\ + M ⋅ {d}^{2} {Xc / dt}^{2} + D ⋅ dX c / dt + K ⋅ Xc - F\end{matrix}$

Moreover, Xc' denotes a true value (supervised data) of the displacement.

The arithmetic layer A3 optimizes the parameter for the intermediate layer so as to minimize a value of an error function LF. Moreover, the error function term f1 is, for example, a mean squared error (MSE), a root mean squared error (RMSE), a mean absolute error (MAE), or the like, and is a norm between the two points of estimation data Xc and supervised data Xc'.

Conventionally, the neural network that uses a loss function formed of only an error function term f1 sometimes outputs a solution (output value) deviating from the physical property indicated by the physical equation in Equation (1). In contrast, in the training process performed by using the loss function LF according to the first embodiment, as compared with a case of the loss function the uses only the error function term f1, it is possible to output a solution further rely on the physical property. As a result of this, it is possible to generate the trained physical constraint model L3' that is a trained model having high output accuracy due to a change in the loss function used in the training section 38.

The density arithmetic section 31, the mass flow rate arithmetic section 32, and the volume flow rate arithmetic section 33 that are included in the arithmetic section 30 calculates each of the density, the mass flow rate, and the volume flow rate by using the estimation displacement Xc that is the output value of the trained physical constraint model L3' illustrated in FIG. 5, and outputs the calculation results to the output section 22.

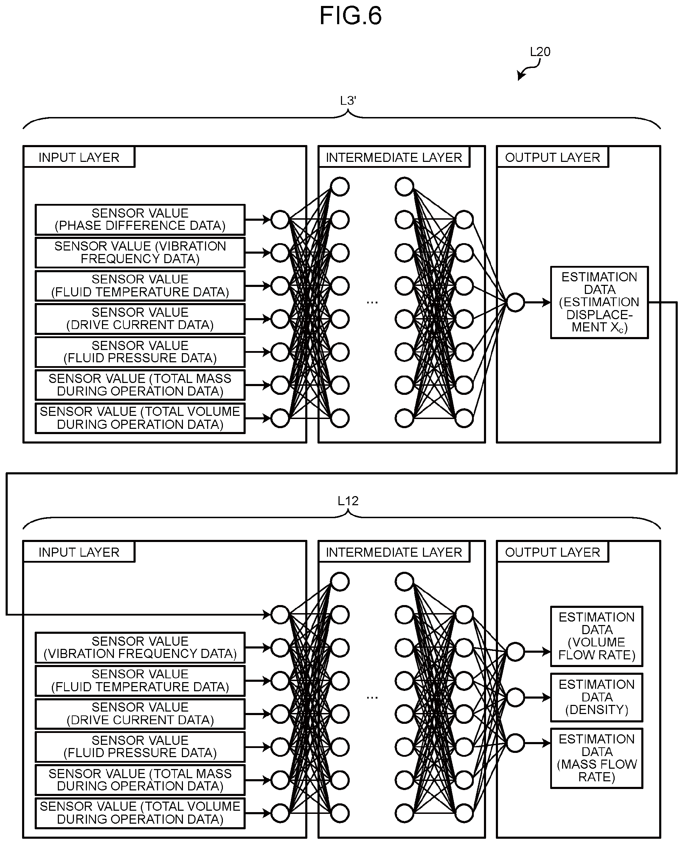

FIG. 6 is a schematic diagram for explaining the generation process for generating the trained physical constraint regression model L20 that includes the trained physical constraint model L3'. As illustrated in FIG. 6, the training section 38 uses the trained physical constraint model L3', generates the trained physical constraint regression model L20 having output accuracy that is higher than that of the trained regression model L1, and sets the trained physical constraint regression model L20 as the trained regression model L1.

A trained regression model L12 adds, in the input layer of the trained regression model L1, the output value of the trained physical constraint model L3' to the node of the input layer as a new input value of the trained regression model L1. In this case, the trained physical constraint regression model L20 is a model that is a combination of the trained physical constraint model L3' and the trained regression model L12. The output value to which the physical constraint related to the sensor characteristic has been added is input to the trained regression model L12 as an input value, so that it is possible to obtain an output value having high accuracy.

Here, the trained physical constraint regression model L20 is generated in accordance with a determination result of the flow pattern, and then the trained physical constraint regression model L20 according to the determination result of the flow pattern is selected.

In the present disclosure, the trained physical constraint model that has been trained by adding the physical constraint that is related to the measurement of the measurement target fluid is generated. Then, the trained physical constraint regression model that corresponds to the flow pattern to be determined and that includes at least the trained physical constraint model is generated. The trained physical constraint regression model performs the arithmetic processing on the output value that is related to the measurement target fluid and that is obtained from the sensor value of the measurement device.

In particular, the physical constraint is a physical equation that is related to the sensor characteristic of the measurement device. The trained physical constraint model is trained to minimize the value of the loss function obtained by adding the physical constraint function (implicit function of the physical equation) that indicates a physical law related to the sensor characteristic to the error function. The trained physical constraint regression model is a combination of the trained physical constraint model and the trained regression model. For example, this combination is constituted such that the output value of the trained physical constraint model is input as the input value of the trained regression model. Moreover, the physical constraint function is the partial differential equation that is related to the sensor characteristic, and is added to the loss function by using the subject partial differential equation as the implicit function.

The trained physical constraint regression model may input the output value of the trained physical constraint model as a new input value of the trained regression model, or may input the output value of the trained physical constraint model by replacing the output value with the existing input value of the trained regression model.

In the first embodiment, by adding the physical equation that governs the sensor characteristic to the loss function, it is possible to add physical plausibility to the output value, and, by performing the regression process using this output value, it is possible to obtain a regression output with high accuracy even in a case of a change in the flow pattern.

### Modification

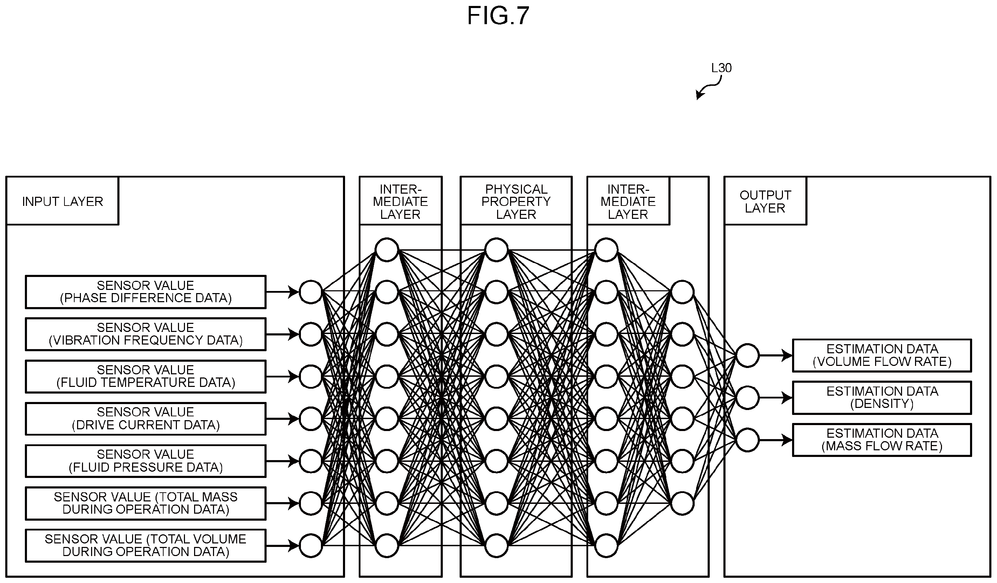

FIG. 7 is a diagram illustrating a modification of the trained physical constraint model. The trained physical constraint regression model L20 according to the first embodiment is a combination of the trained physical constraint model L3' and the trained regression model L12. A trained physical constraint regression model L30 according to the modification performs a training by adding a physical constraint by including, in the intermediate layer of the trained regression model L1, a range of the feature value that indicates the already known physical property related to the measurement target fluid and/or a physical equation as a parameter. Therefore, the trained physical constraint regression model L30 is used for the regression process without any change.

As illustrated in FIG. 7, the trained physical constraint regression model L30 is provided with the physical property layer that has a range of the feature value that indicates the already known physical property related to the measurement target fluid and/or a physical equation including the feature value as the intermediate layer. As the intermediate layer of the physical property layer, a governing equation (physical equation) that is completed in a part of the intermediate layer is applied, and a part of the neural network is restricted. For the neuron of the physical property layer, a feature value of dimensionless numbers corresponding to a limit value of dimensionless numbers, such as a Reynolds number, a Grashof number, a Mach number, a Schmidt number, a Strouhal number, a Froude number, an Eckart number, a Rossby number, or a friction coefficient, may be included. In other words, by limiting the possible range of the feature value, it is possible to suppress a deviation between the output value and the true value, and the accuracy of the output value is accordingly enhanced. In addition, by limiting the possible range of these feature values, it is possible to suppress a load applied to the arithmetic calculation.

Moreover, in FIG. 7, the physical property layer is a single layer, but may be two or more layers. For example, a plurality of layers are provided in accordance with the range of the physical equation and/or the feature value. For example, in a case of a gas-liquid two-phase flow, by providing a physical property layer to each of a liquid phase portion and a gas phase portion, there is a need to satisfy both of the equation of the liquid phase and the physical equations of the gas phase including the feature value. In particular, it is known that, in the measurement target fluid in which a state exhibiting, for example, an air bubble flow, a slug flow, an annular flow, a mist flow, or the like, a constraint is imposed on the feature value with a dimensionless number for each of the flow states in the liquid phase portion and the gas phase portion. The dimensionless number functions to output a more physically plausible output value when calculation is performed on each of the components of a liquid and gas rather than an appearance state that is a combination state of the mixture of gas and a liquid.

In the modification, indirect control is performed on the basis of a unit of the interior or a connection portion of a neuron, or a layer, instead of performing direct control using the loss function described in the first embodiment. Then, in the modification, it is possible to use the trained model that has been used at the time of the training as the trained physical constraint regression model without any change. In addition, the trained model of the training according to the modification is also applicable to the determination process as the trained physical constraint discriminative model without any change.

Moreover, in the first embodiment and the modification, a correction is performed by adding a difference between the true value data obtained at the time of the training of the trained physical constraint regression model and the current output value to the current output value, and then the obtained value is output.

### Example of operation

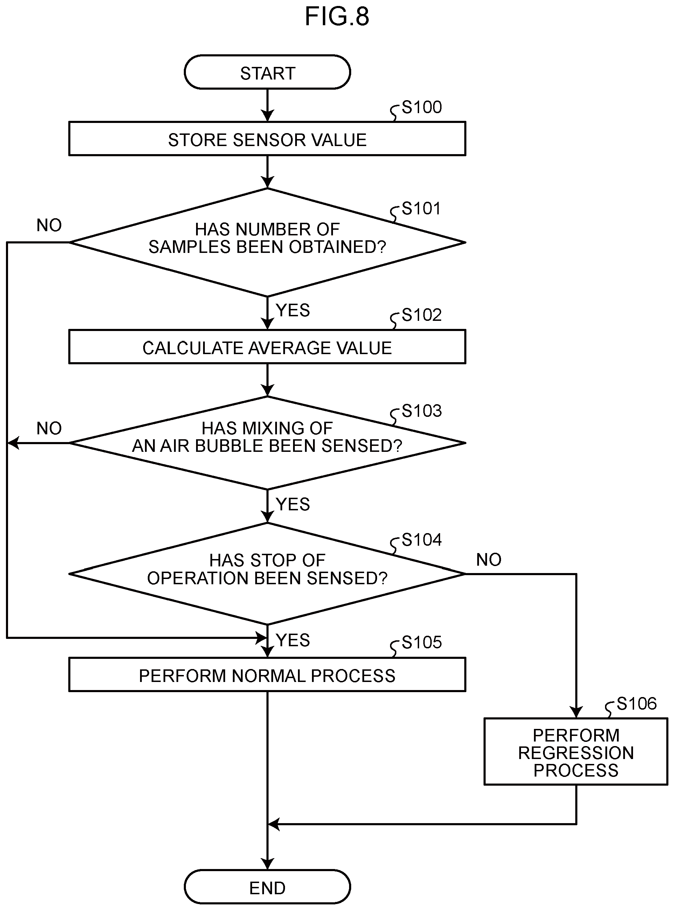

FIG. 8 is a flowchart for explaining an example of a first operation of the field device 1 illustrated in FIG. 1. FIG. 8 is the flowchart summarized the outline of the main operation implemented by the field device 1. Moreover, each of the determination process and the regression process uses the above described trained physical constraint discriminative model or the trained physical constraint regression model as appropriate.

At Step S100, the arithmetic section 30 stores at least one type of sensor value that has been acquired by using the detection section 10 and that is needed to calculate the output value as the data in the storage section 23.

At Step S101, the arithmetic section 30 determines whether or not the number of samples that is enough to calculate the average value of the moving window at a predetermined time interval that has been set to the sensor value stored at Step S100 has been obtained. If the arithmetic section 30 determines that the number of samples has been obtained, the arithmetic section 30 performs the process at Step S102. If the arithmetic section 30 determines that the number of samples has not been obtained, the arithmetic section 30 performs the process at Step S105.

At Step S102, if the arithmetic section 30 determines that the number of samples has been obtained at Step S101, the arithmetic section 30 calculates the average value of the moving window at the predetermined time interval that has been set to the sensor value that has been stored at Step S100.

At Step S103, the arithmetic section 30 determines whether or not mixing of an air bubble into the fluid has been sensed on the basis of the average value calculated at Step S102. If the arithmetic section 30 determines that the mixing of the air bubble into the fluid has been sensed, the arithmetic section 30 performs the process at Step S104. If the arithmetic section 30 determines that the mixing of the air bubble into the fluid has not been sensed, the arithmetic section 30 performs the process at Step S105.

The arithmetic section 30 determines whether or not mixing of an air bubble has been sensed by comparing a first threshold with the average value of the moving window at the predetermined time interval that has been set to at least one type of the output value and the sensor value, in a case of the flowchart illustrated in FIG. 8, the sensor value as one example. If the average value exceeds the first threshold, the arithmetic section 30 determines that mixing of an air bubble has been sensed. The arithmetic section 30 decides the first threshold that is to be compared with the average value and that is used to determine whether or not an air bubble has been mixed by using the above described trained discriminative model L2 and the trained physical constraint discriminative model.

At Step S104, if the arithmetic section 30 determines that mixing of an air bubble has been sensed at Step S103, the arithmetic section 30 determines whether or not a stop of the operation of the field device 1 has been sensed. If the arithmetic section 30 determines that the stop of the operation of the field device 1 has been sensed, the arithmetic section 30 performs the process at Step S105. If the arithmetic section 30 determines that the stop of the operation of the field device 1 has not been sensed, the arithmetic section 30 performs the process at Step S106.

At Step S105, if the arithmetic section 30 determines that the stop of the operation of the field device 1 has been sensed at Step S104, the arithmetic section 30 performs a normal process that is performed when the operation of the field device 1 is stopped. If the arithmetic section 30 determines that the number of samples has not been obtained at Step S101, the arithmetic section 30 performs the normal process related to an output value measurement obtained from the field device 1. If the arithmetic section 30 determines that mixing of the air bubble has not been sensed at Step S103, the arithmetic section 30 performs the normal process related to the output value measurement obtained from the field device 1.

At Step S106, if the arithmetic section 30 determines that the stop of the operation has not been sensed at Step S104, the arithmetic section 30 performs the regression process related to the output value by using the previously built model and using the data that has been acquired at Step S100 because the mixing of the air bubble has been sensed at Step S103. In this way, if the arithmetic section 30 determines that the operation of the field device 1 does not stop, the arithmetic section 30 performs the regression process by using the trained physical constraint regression models L20, L30, and the like, and outputs an output value.

As described above, the arithmetic section 30 uses change point detection that is performed by using the average value of the moving window at an arbitrary time interval. In a case where the arithmetic section 30 desires to sense mixing of an air bubble, for example, the arithmetic section 30 performs constant monitoring of at least one type of sensor value that is used for the regression process and the determination process. In a case where the sensor value that is being monitored exceeds the set first threshold, the arithmetic section 30 determines that mixing of an air bubble has been sensed. In order to reduce erroneous sensing caused by another factor, such as noise, that is different from the mixing of the air bubble, the arithmetic section 30 calculates the average value of the moving window at the predetermined time interval, and compares the obtained result with the first threshold. The first threshold is decided on the basis of the trained discriminative model L2 that has been built in advance by performing the supervised training using the supervised data.

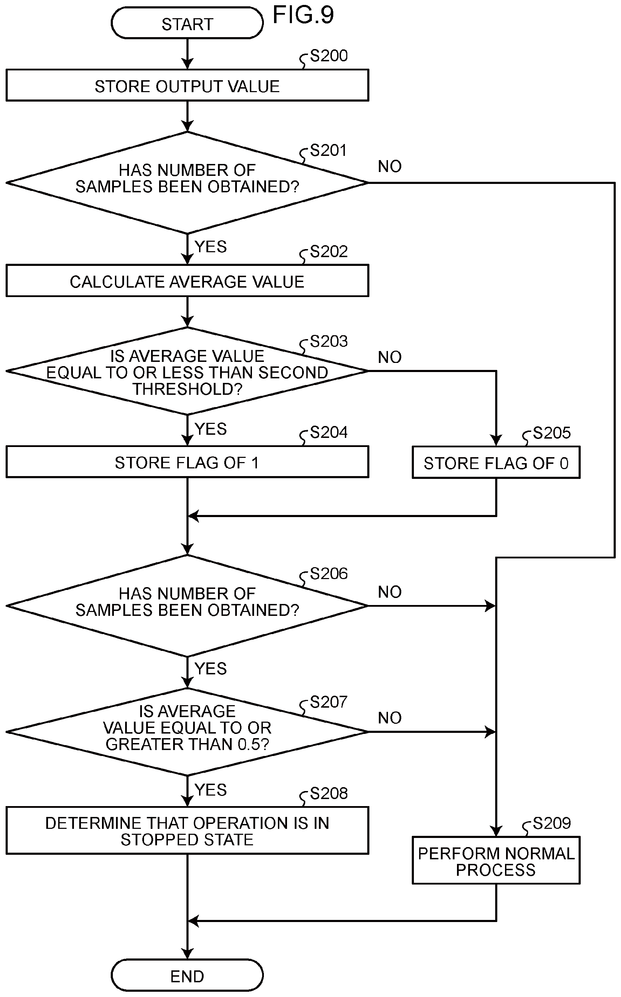

FIG. 9 is a flowchart for explaining an example of a second operation of the field device 1 illustrated in FIG. 1. FIG. 9 is a diagram more specifically illustrating the determination process of the stop determination that is performed at the process Step S104 illustrated in FIG. 8.

At Step S200, the arithmetic section 30 stores at least one type of the calculated output values in the storage section 23.

At Step S201, the arithmetic section 30 determines whether or not the number of samples that is enough to calculate the average value of the moving windows at the predetermined time interval that has been set to the output value stored at Step S200 has been obtained. If the arithmetic section 30 determines that the number of samples has been obtained, the arithmetic section 30 performs the process at Step S202. If the arithmetic section 30 determines that the number of samples has not been obtained, the arithmetic section 30 performs the process at Step S209.

At Step S202, If the arithmetic section 30 determines that the number of samples has been obtained at Step S201, the arithmetic section 30 calculates the average value of the moving window at the predetermined time interval that has been set to the output value that has been stored at Step S200.

At Step S203, the arithmetic section 30 determines whether or not the average value that has been calculated at Step S202 is equal to or less than the second threshold. If the arithmetic section 30 determines that the average value is equal to or less than the second threshold, the arithmetic section 30 performs the process at Step S204. If the arithmetic section 30 determines that the average value is greater than the second threshold, the arithmetic section 30 performs the process at Step S205. The arithmetic section 30 decides a second threshold that has been set to at least one type of output value that is used to set a flag of an in-operation or to set a stopped state by using the above described trained discriminative model L2.

At Step S204, if the arithmetic section 30 determines that the average value is equal to or less than the second threshold at Step S203, the arithmetic section 30 sets a flag "1" and stores the flag "1" in the storage section 23 as information.

At Step S205, if the arithmetic section 30 determines that the average value is greater than the second threshold at Step S203, the arithmetic section 30 sets a flag "0" and stores the flag "0" in the storage section 23 as information.

At Step S206, the arithmetic section 30 determines whether or not the number of samples that is enough to calculate the average value of the moving window at the predetermined time interval that has been set to the value of the flag stored at Step S204 and Step S205 has been obtained. If the arithmetic section 30 determines that the number of samples has been obtained, the arithmetic section 30 performs the process at Step S207. If the arithmetic section 30 determines that the number of samples has not been obtained, the arithmetic section 30 performs the process at Step S209.

At Step S207, if the arithmetic section 30 determines that the number of samples has been obtained, the arithmetic section 30 calculates the average value of the values of the flag. The average value is calculated by setting the moving window at the predetermined time interval to, for example, the values of the flags stored at the processes performed at Step S204 and Step S205. The arithmetic section 30 determines whether or not the calculated average value is equal to or greater than 0.5. If the arithmetic section 30 determines that the average value is equal to or greater than 0.5, the arithmetic section 30 performs the process at Step S208. If the arithmetic section 30 determines that the average value is less than 0.5, the arithmetic section 30 performs the process at Step S209.

At Step S208, if the arithmetic section 30 determines that the average value is equal to or greater than 0.5 at Step S207, the arithmetic section 30 determines that the operation of the field device 1 is in the stopped state.

At Step S209, if the arithmetic section 30 determines that the average value is less than 0.5 at Step S207, the arithmetic section 30 determines that the field device 1 is in operation, the arithmetic section 30 performs the normal process related to the output value measurement obtained from the field device 1. If the arithmetic section 30 determines that the number of samples has not been obtained at Step S201, the arithmetic section 30 performs the normal process related to the output value measurement obtained from the field device 1. If the arithmetic section 30 determines that the number of samples has not been obtained at Step S206, the arithmetic section 30 performs the normal process related to the output value measurement obtained from the field device 1.

The stop determination illustrated in FIG. 9 is used to determine, in a case where, for example, a distillation application is performed twice or three times a day, a stop of the distillation application between the first time and the second time, and between the second time and the third time. In general, the field device sometimes does not have a sufficient memory configuration for the hardware in order for electrical power consumption and cost restriction.

It is possible to easily reduce the erroneous sensing related to the operation stoppage by setting a wider range for the average value for the output values, but there is a limit to the memory available for arrays used in an averaging arithmetic operation. In the field device, an arithmetic operation cycle for the measurement value of the output value is often in milliseconds. For example, to calculate the average value for the output values obtained in one second with a 10 ms sampling period, an array of 100 numerical values is needed. In practice, with the output values obtained in one second, the risk of erroneous sensing is extremely high in a case where the sensor value and the output value rapidly change due to noise or the like. Therefore, an array available for 60 seconds is needed.

Accordingly, the array available for 60 seconds has been prepared by using a value measured every 100 cycles at intervals of 10 ms as a representative value. As a result of this, in a normal situation, there is a need to prepare an array of 6000 numerical values in order to calculate the average value of the output values obtained in 60 seconds, but only preparing an array containing 60 representative values for 1 second is sufficient.

At the time of stop determination, in a case where the average value of the output values for 60 seconds becomes equal to or less than the second threshold, instead of immediately determining that this state is the stopped state, the arithmetic section 30 sets a flag to 1 at the time of a time point at which the average value becomes equal to less than the second threshold, and stores the flag in the array that is available for 60 seconds. The arithmetic section 30 similarly sets the flag to 0 at the time of in operation, and determines the stopped state by calculating the average value with respect to these flags in a case of an arbitrary threshold of, for example, 0.5 or above. With the stop determination described above, the risk of erroneous sensing of the operation stoppage during the operation of the field device 1 is significantly reduced.

The method of calculating the average value, the process of the stop determination, the process of determining the operation, and the like are different in accordance with the capacity and the application of the field device 1, and may be accordingly changed as appropriate in accordance with the specifications and the application of the field device 1.

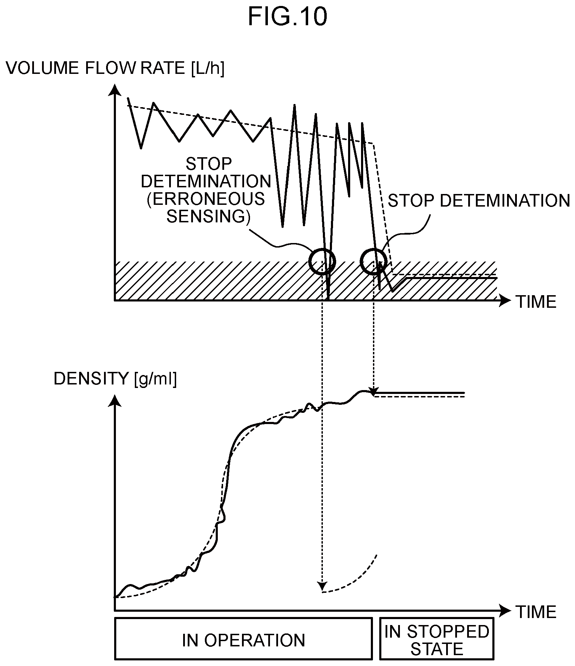

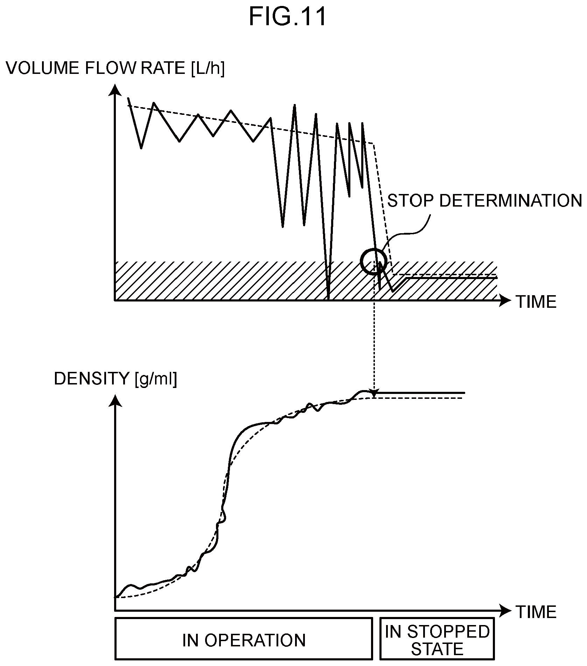

FIG. 10 and FIG. 11 are schematic diagrams each explaining a third operation example of the field device 1 illustrated in FIG. 1. A set of graphs each indicating a temporal change in each of the volume flow rate and the density included in FIG. 10 indicates the state indicated at the time at which the determination process of the stop determination that has been described above with reference to FIG. 9. The other set of graphs each indicating a temporal change in each of the volume flow rate and the density included in FIG. 11 indicates the state indicated at the time at which the determination process of the stop determination that has been described above with reference to FIG. 9. In FIG. 10 and FIG. 11, each of the solid lines indicates the output value that is output from the normal process related to the output value measurement obtained from the field device 1. Each of the broken lines indicates the output value that is output from the regression process obtained from the field device 1.

For example, in the graph illustrated in FIG. 10 indicating the volume flow rate by using the vertical axis, the determination process of the stop determination that has been described above with reference to FIG. 9 is not performed, it is determined that the field device 1 has stopped when the value of the volume flow rate falls below the second threshold and temporarily drops into the area indicated by diagonal lines. The trained model is built by being trained only at the time of an operational state of the field device 1. Therefore, it is difficult to perform an accurate arithmetic operation on the output value by the regression process when the field device 1 is not in operation. Moreover, the boundary line illustrated on the upper side of the diagonal line portion (a positive direction of the vertical axis) illustrated in the graph of the volume flow rate in FIG. 10 corresponds to the second threshold.

In a case where it is erroneously sensed that the field device 1 is in a stopped state as a result of the output value dropping momentarily as indicated by the graph representing the volume flow rate using the vertical axis illustrated in FIG. 10, the total volume during operation that is used in the regression process performed on the density is reset to zero. As a result of this, as indicated by the graph representing the density using the vertical axis illustrated in FIG. 10, the output value of the density obtained from the regression process also accordingly returns to the initial value.

In order to reduce an inaccurate output, the determination process of the stop determination that has been explained above by using FIG. 9 is performed. With the determination process, even when an output value drops due to momentary noise, the arithmetic section 30 determines that this state is caused by noise, and performs a process that is less susceptible to noise. As illustrated in FIG. 11, the arithmetic section 30 does not determine that the field device 1 has stopped on the basis of the state in which the value of the volume flow rate falls below the second threshold and temporarily drops into the area indicated by diagonal lines, but determines that the field device 1 is in a stopped state on the basis of the state in which the value of the volume flow rate continuously falls below the second threshold. Moreover, regarding the temporal change in mass flow rate, the similar tendency is also observed in the temporal change in volume flow rate. As a result of this, the arithmetic section 30 is able to perform the determination process using the mass flow rate instead of using the volume flow rate by using the same method as that used at the time of the volume flow rate.

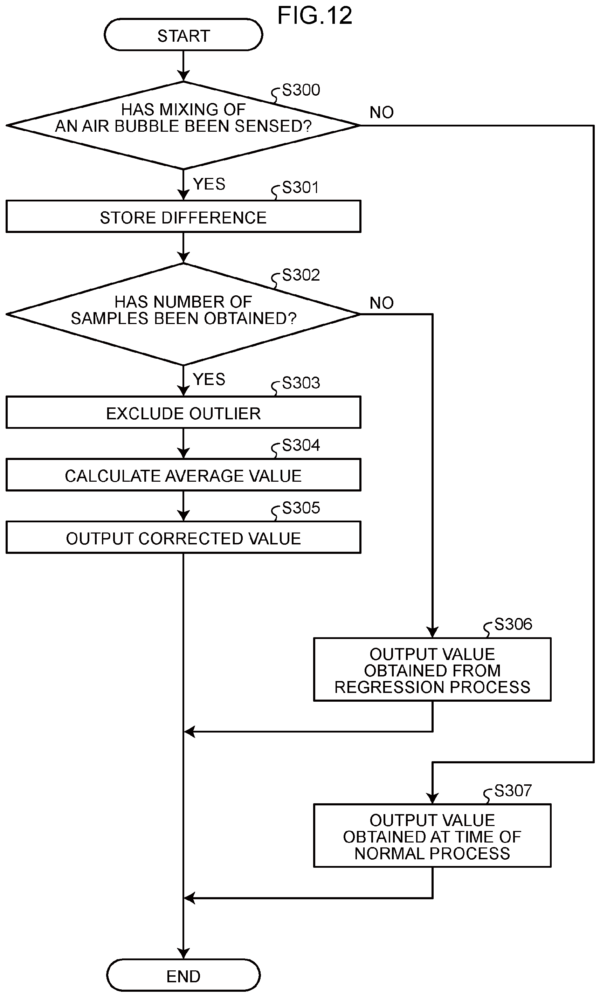

FIG. 12 is a flowchart for explaining a fourth operation example of the field device 1 illustrated in FIG. 1. FIG. 12 illustrates an outline of a correction process for correcting the output value that is output as a result of the regression process performed by the field device 1.

It is also assumed that the output values of the density and the like of the fluid change over time due to the operation, as in the distillation process. In a case where the regression process is performed on this kind of fluid, the output value thereof is highly dependent on the initial output value of the fluid indicated at the time of the process. Therefore, in a case where the output value indicating at the start of the process varies for each operation due to differences or the like in an operating method of the user, the output value that is output by the regression process may also deviate.

The arithmetic section 30 corrects the obtained output value on the basis of the difference between the output value that has been output by the regression process and the output value that is obtained when an air bubble has not been mixed into a fluid. More specifically, the arithmetic section 30 stores, in the storage section 23, the difference between the output value obtained at the normal time when an air bubble has not been mixed into a fluid and the output value obtained on the basis of the regression process when the air bubble has been sensed. The arithmetic section 30 performs the correction process on the subject output value by adding a correction value to the output value obtained when the air bubble has been sensed. The arithmetic section 30 stores the difference that is used for the correction process in the array provided in the storage section 23, calculates the average value of the differences after excluding an outlier, and then defines the obtained value as the correction value.

At Step S300, the arithmetic section 30 determines, in the same manner as that performed at, for example, Step S103 illustrated in FIG. 8, whether or not mixing of an air bubble has been sensed. If the arithmetic section 30 determines that the mixing of the air bubble into the fluid has been sensed, the arithmetic section 30 performs the process at Step S301. If the arithmetic section 30 determines that the mixing of the air bubble into the fluid has not been sensed, the arithmetic section 30 performs the process at Step S307.

At Step S301, if the arithmetic section 30 determines that the mixing of the air bubble into the fluid has been sensed at Step S300, the arithmetic section 30 stores, in the storage section 23, the difference between the output value obtained at the normal time when an air bubble has not been mixed into a fluid and the output value obtained on the basis of the regression process when the air bubble has been sensed.

At Step S302, the arithmetic section 30 determines whether or not the number of samples that is enough to calculate the average value of the moving window at a predetermined time interval that has been set to the sensor value stored at Step S301 has been obtained. If the arithmetic section 30 determines that the number of samples has been obtained, the arithmetic section 30 performs the process at Step S303. If the arithmetic section 30 determines that the number of samples has not been obtained, the arithmetic section 30 performs the process at Step S306.

At Step S303, if the arithmetic section 30 determines that the number of samples has been obtained at Step S302, the arithmetic section 30 excludes an outlier from among the differences stored at Step S301.

At Step S304, after the arithmetic section 30 has excluded the outlier at Step S303, the arithmetic section 30 calculates the average value of the differences that are stored at Step S301 as the correction value.

At Step S305, the arithmetic section 30 outputs a value obtained by correcting the output value that has been obtained by adding the correction value calculated at Step S304 to the output value that has been obtained by the regression process at the time at which the air bubble has been sensed to, for example, the output section 22.

At Step S306, if the arithmetic section 30 determines that the number of samples has not been obtained at Step S302, the arithmetic section 30 outputs the output value that has been obtained from the regression process to, for example, the output section 22.

At Step S307, if the arithmetic section 30 determines that the mixing of the air bubble into the fluid has not been sensed at Step S300, the arithmetic section 30 outputs the output value that is obtained at the time of normal process in which both of the regression process and the correction process are not performed to, for example, the output section 22.

In the following, details of the algorithm that is used in the field device 1 will be explained as one example.

A timer count provided in an interior of the field device 1 advances at the same time as the start of the operation of the field device 1. The arithmetic section 30 included in the field device 1 stores, in the storage section 23, at least one type of the output value and the sensor value that are output by the normal process and that are used to determine the operation stoppage every 100 cycles of the timer count.

The arithmetic section 30 needs to acquire at least the number of sample values equal to or greater than the prepared array in order to determine whether or not an air bubble has been mixed. For example, in a case where the array available for 60 seconds has been prepared, the arithmetic section 30 calculates the average value after 60 seconds have elapsed. Therefore, in a period of time in which the average value is not calculated, the function of the determination process related to whether or not an air bubble has been mixed is not performed even when an air bubble has been mixed into a fluid. Therefore, the relationship between the size of the array as a measure to reduce erroneous sensing and the loading time for sensing whether or not an air bubble has been mixed is in a trade-off relationship. However, the timer count starts after the power supply of the field device 1 is turned on, so that timer count is executed only once. Therefore, the above matters are not usually a significant problem.

In a case where the timer count is equal to or greater than the prepared array, the arithmetic section 30 always performs at the same time the determination process that is related to whether or not an air bubble has been mixed and the determination process that is related to the operation stoppage. Both of the first threshold and the second threshold obtained from the above described machine training performed by using the trained discriminative model L2 is installed in the field device 1.

In the determination process that is related to whether or not an air bubble has been mixed, as described as above, the arithmetic section 30 compares the average value of at least one type of sensor value with the first threshold. In the determination process related to the operation stoppage, as described as above, the arithmetic section 30 compares the output value that is used for the application with the second threshold.

In the case where the arithmetic section 30 determines that an air bubble has been mixed into the fluid, the arithmetic section 30 performs the regression process by using the trained regression model L1 that has been built in advance, and outputs the output value. In the case where the arithmetic section 30 determines that the field device 1 is in a stopped state, the arithmetic section 30 determines that an operation of the application for distillation or the like has stopped, and sets the array of the correction values of each of the timer count and the output value and the corresponding difference to zero.

Due to the above, in a case where the timer count is reset and the application process of distillation or the like is again operated, the output values are again sequentially stored in the array. As a result of this, the arithmetic section 30 repeatedly performs the determination process that is related to whether or not an air bubble has been mixed and the determination process that is related to the operation stoppage.

With the field device 1 according to the first embodiment described above, it is possible to further accurately measure the output value even in a case where a tramp material has been mixed into a fluid while the output values of the fluid change over time. The field device 1 acquires at least one of the results of the regression process and the determination process that are related to the output values and that have been performed by using both of the trained model that has been built on the basis of the data obtained when a tramp material has been mixed into the fluid and the acquired data. As a result of this, the field device 1 is also applicable to a fluid in which output values change over time, such as a distillation process. The field device 1 is able to output an accurate measurement value of the output value on the basis of the regression process even when a tramp material, such as an air bubble, has been mixed into the fluid.

The field device 1 acquires the result by performing at least one of the regression process and the determination process. The field device 1 performs at least one of the regression process and the determination process by itself. As a result of this, the field device 1 is able to complete various kinds of processes from a training phase for building the trained model to an estimation phase in which the trained model is used in the interior of the field device 1.

With the field device 1, it is possible to perform a training process with further accuracy based on a label by building in advance the trained model based on supervised learning by using the data indicated when a tramp material has been mixed into the fluid and the label. The field device 1 is able to perform at least one of the regression process and the determination process with further accuracy by using the trained model that has been built based on this kind of training process.

The field device 1 acquires the result obtained when each of the regression process and the determination process has been performed by using a different trained model each other. The field device 1 uses trained models that are formed independently of each other for the regression process and the determination process. The field device 1 is able to implement an output with further accuracy in the regression process and the determination process by using the plurality of trained models in this manner.

The field device 1 is able to more appropriately decide the first threshold by deciding the first threshold that is used to determine whether or not a tramp material has been mixed by using the trained models. The field device 1 is able to objectively and accurately decide the first threshold that was arbitrarily set in the past by the user on the basis of an experience or the like of the user. As a result of this, the field device 1 is able to perform with further accuracy the determination process for determining whether or not a tramp material has been mixed performed by using the first threshold.

If the field device 1 determines that a tramp material has been mixed into a fluid, the field device 1 performs the regression process by using the trained model, and outputs the output value. As a result of this, the field device 1 is able to output a further accurate measurement value by performing regression on the output value even in a case where an abnormal value occurs in the output value in the normal process as a result of the tramp material that has been mixed into the fluid.

The field device 1 corrects the output value on the basis of the difference between the output value that has been output at the time of the regression process and the output value that has been obtained when a tramp material has not been mixed into a fluid. As a result of this, even if there are variations in the operating method at the time of the start of the process, the output value, and the like for each operation, the field device 1 is able to perform correction by acquiring an error of the output value that is obtained after the regression process and that is generated due to the variations. The field device 1 is able to accurately correct the output value obtained after the regression process even if a condition including a type and an amount of small air bubbles, such as microbubbles, and a period of time indicated when air bubbles continue to enter for a long time, or the like varies for each operation.

The field device 1 is able to more appropriately decide the second threshold by deciding the second threshold for setting the flag indicating in operation or in a stopped state by using the model. The field device 1 is able to objectively and accurately decide the second threshold that was arbitrarily set in the past by the user on the basis of an experience or the like of the user. As a result of this, the field device 1 is able to perform with further accuracy the determination process of stop determination for reducing erroneous sensing of the operation stoppage performed by using the second threshold.

As a result of the output value including at least one type of the density of the fluid, the volume flow rate, the mass flow rate, and the air bubble volume percentage, the field device 1 is able to perform the measurement of an output value that is needed to function as, for example, a Coriolis flowmeter and the regression process. The field device 1 is able to function as the Coriolis flowmeter.

In the first embodiment described above, it has been described that the field device 1 builds the trained model in advance based on the supervised learning by using the data obtained when a tramp material has been mixed into a fluid and the labels, but the embodiment is not limited to this description. The field device 1 may built in advance the model that is used for the regression process on the basis of unsupervised learning or semi-supervised learning. The field device 1 may built in advance the trained model that is used for the determination process on the basis of the unsupervised learning or the semi-supervised learning.

In the first embodiment described above, it has been described that the field device 1 acquires the result obtained when each of the regression process and the determination process has been performed by using a different trained model each other, but the embodiment is not limited to this description. The field device 1 may use the common and the same trained model without using the trained model that is formed independently of each other for the regression process and the determination process. In contrast, the field device 1 may further use the trained regression model L1 that is different with respect to different types of output values in the regression process. For example, regarding the mass flow rate, the volume flow rate, and the density, the trained regression model L1 need not always match each other. The field device 1 may also further use the trained discriminative model L2 that is different with respect to different types of determination in the determination process.

In the first embodiment described above, it has been described that the field device 1 decides the first threshold that is used to determine whether or not a tramp material has been mixed by using the trained model, but the embodiment is not limited to this description. The field device 1 does not need to such a decision process performed by using the trained model. The field device 1 may decide the first threshold to the value that has been set by the user as appropriate.

In the first embodiment described above, it has been described that, if the field device 1 determines that the tramp material has been mixed into the fluid, the field device 1 performs the regression process by using the trained model, and output the output value, but the embodiment is not limited to this description. The field device 1 does not need to perform this kind of regression process.

In the first embodiment described above, it has been described that the field device 1 correct the output value that has been output at the time of the regression process, but the embodiment is not limited to this description. The field device 1 does not need to perform this kind of correction process.

In the first embodiment described above, it has been described that the field device 1 decides the second threshold for setting a flag that is used for a state in operation or in a stopped state by using the model, but the embodiment is not limited to this description. The field device 1 does not need to perform this kind of decision process performed by using the trained model. The field device 1 may decide the second threshold to the value that has been set by the user as appropriate.

In the first embodiment described above, it has been described that the output value includes at least one type of the density of the fluid, the volume flow rate, the mass flow rate, and the air bubble volume percentage, but the embodiment is not limited to this description. The output value may include another arbitrary physical amount capable for a measurement performed by the field device. As a result of this, the field device 1 does not limited to the Coriolis flowmeter. The field device 1 may also include another field device.

In the first embodiment described above, it has been described that the fluid includes a liquid, but the embodiment is not limited to this description. The fluid may also include gas.

### Second Embodiment

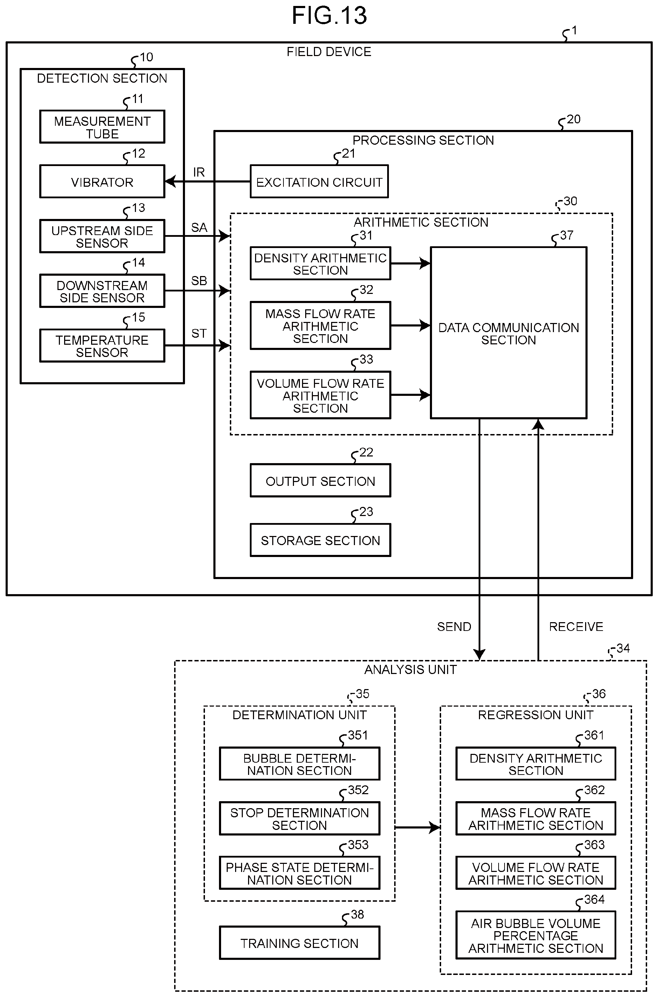

FIG. 13 is a block diagram illustrating a schematic configuration of the field device 1 according to a second embodiment of the present disclosure. A configuration and a function of the field device 1 according to the second embodiment will mainly be described with reference to FIG. 13. The field device 1 according to the second embodiment is different from the first embodiment in that the field device 1 according to the second embodiment does not include the analysis unit 34 by itself.

The other configurations, functions, effects, modifications, and the like are the same as those of the first embodiment, and the corresponding descriptions apply to the field device 1 according to the second embodiment. In a description below, by assigning the same reference numerals to components having the same configuration as those described above in the first embodiment, descriptions thereof will be omitted. Parts that are different from those of the first embodiment will mainly be described.

In the first embodiment, it has been described that the arithmetic section 30 acquires the result by performing at least one of the regression process and the determination process, but the embodiment is not limited to this description. The arithmetic section 30 does not need to perform at least one of the regression process and the determination process by itself. The arithmetic section 30 may acquire the result of at least one of the regression process and the determination process that has been performed outside the field device 1 by using communication. For example, the arithmetic section 30 may acquire the result of at least one of the regression process and the determination process that has been performed outside the field device 1 from an external device by using communication. In other words, the analysis unit 34 that includes one of the determination unit 35, the regression unit 36, and the training section 38 may be provided outside the field device 1.

The external device including the analysis unit 34 is, for example, a server or an on-premise edge environment and cloud environment an edge environment, and includes one or a plurality of server devices that are communicable each other. The external device is not limited to these examples, but may include a mobile device, such as a mobile phone, a smartphone, a tablet terminal, and an arbitrary general-purpose electronic device, such as a Personal Computer (PC), or may include another dedicated electronic device with respect to the field device 1.

The arithmetic section 30 included in the field device 1 further include a data communication section 37. The data communication section 37 includes a communication module conforming to the communication standard based on an arbitrary wireless communication or an arbitrary wire communication. The communication standard includes the mobile communication standards, such as a wireless Local Area Network (LAN) standard, a near field wireless communication standard, the 4^{th} Generation (4G), and the 5^{th} Generation (5G), and the Internet standard, or the like. The field device 1 is communicably connected to the above described external device via the data communication section 37.

The field device 1 does not need to perform an arithmetic operation related to at least one of the regression process and the determination process or a process of the training section 38 by acquiring the results of at least one of the regression process and the determination process that has been performed outside the field device 1 or by acquiring the result obtained from the training section 38 by using communication. Therefore, the field device 1 is able to reduce the load applied to the arithmetic operation related to the subject operation.

In the above described second embodiment, it has been described that the determination unit 35, the regression unit 36, and the training section 38 are provided at the outside of the field device 1, but the embodiment is not limited to this description. One of the determination unit 35, the regression unit 36, and the training section 38 may be provided in the inside of the field device 1, and the other devices may be provided at the outside of the field device 1.

In the above described second embodiment, various kinds of processes from the training phase for building the trained model to the estimation phase in which the trained model is used are to be performed at the outside of the field device 1, but the embodiment is not limited to this example. One of the various kinds of processes to be performed in the training phase and the various kinds of processes to be performed in the estimation phase may be performed by the field device 1, and the other of the processes to be performed may be performed by the external device. In addition, the same applies to the process performed in the training section 38.

### System

The flow of the processes, the control procedures, the specific names, and the information containing various kinds of data or parameters indicated in the above specification and drawings can be arbitrarily changed unless otherwise stated.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, all or any part of each of the processing functions performed by each of the devices can be implemented by a CPU and by programs analyzed and executed by the CPU or implemented as hardware by wired logic.

### Hardware

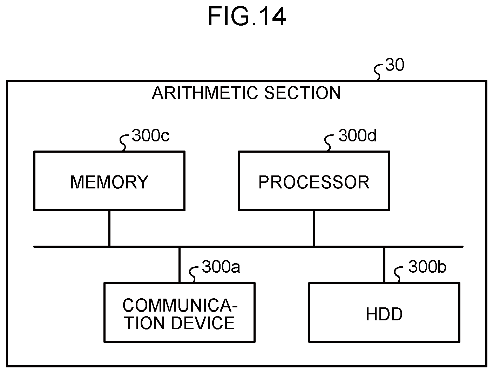

In the following, an example of a hardware configuration of the arithmetic section 30 will be described. FIG. 14 is a diagram for explaining the hardware configuration. As illustrated in FIG. 14, the arithmetic section 30 includes a communication device 300a, a hard disk drive (HDD) 300b, a memory 300c, and a processor 300d. Furthermore, each of the units illustrated in FIG. 14 is connected by a bus or the like with each other.

The communication device 300a is a network interface card or the like, and performs communication with another server. The HDD 300b stores therein a database and a program that causes the functions illustrated in FIG. 2 to operate.

The processor 300d operates the process that executes each of the functions described above in FIG. 1 or the like by reading the program that executes the same processes as those performed by each of the processing sections illustrated in FIG. 1 from the HDD 300b or the like and loading the read program in the memory 300c. For example, the process executes the same functions as those performed by each of the processing sections included in the arithmetic section 30.

In this way, the arithmetic section 30 performs a training method by reading the program and executing the read program. In addition, the arithmetic section 30 is also able to implement the same functions as those described above in the first embodiment, the second embodiment, and the modification by reading the above described program from a recording medium by a medium reading device and executing the read program. Moreover, the program according to the other embodiment and the other modification need not always be executed by the arithmetic section 30. For example, the present disclosure may also be similarly applied to a case in which another computer or another server executes the program or in a case in which another computer and another server cooperatively execute the program with each other.

The program according to the embodiment may be distributed via a network, such as the Internet. Furthermore, the program may be executed by being recorded in a computer readable medium, such as a hard disk, a flexible disk (FD), a CD-ROM, a magneto-optical disk (MO), or a digital versatile disk (DVD), and being read from the recording medium by the computer.

## Claims

1. A measurement device (1) comprising:
a memory (300c); and
a processor (300d), wherein
the processor (300d) executes a process of
generating (38) a trained physical constraint model (13') that has been trained by adding a physical constraint related to a measurement of a measurement target fluid (38),
determining (35) a flow pattern of the measurement target fluid, and
performing (36) arithmetic processing on an output value that corresponds to the determined flow pattern, that is related to the measurement target fluid, and that is obtained from a sensor value of the measurement device by using a trained physical constraint regression model (L20) that includes at least the trained physical constraint model (L3').

2. The measurement device (1) according to claim 1, wherein
the physical constraint is a physical equation related to a sensor characteristic of the measurement device (1),
the trained physical constraint model (L3') is trained to minimize a value of a loss function (f1) obtained by adding a physical constraint function that indicates a physical law related to the sensor characteristic to an error function, and
the trained physical constraint regression model (L20) is a combination of a trained regression model (L12) and the trained physical constraint model (L3'), and in which an output value of the trained physical constraint model (L3') is input to the trained regression model (L12) as an input value.

3. The measurement device (1) according to claim 2, wherein the output value of the trained physical constraint model (L3') is input to the trained physical constraint regression model (L20) as a new input value of the trained regression model (L12).

4. The measurement device (1) according to claim 2, wherein the output value of the trained physical constraint model (L3') is input to the trained physical constraint regression model (L20) by replacing an existing input value of the trained regression model (L12).

5. The measurement device (1) according to claim 2, wherein the physical constraint function is a partial differential equation related to the sensor characteristic, and is added to the loss function (f1) by using the partial differential equation as an implicit function (f2).

6. The measurement device (1) according to claim 2, wherein
the physical constraint is a range of a feature value that indicates an already known physical property related to the measurement target fluid and/or the physical equation, and
the trained physical constraint regression model (L30) has been trained by including the physical equation and/or the range of the feature value as a parameter in an intermediate layer provided in the trained regression model (L1).

7. The measurement device (1) according to claim 6, wherein
the determining (35) the flow pattern of the measurement target fluid includes determining the flow pattern of the measurement target fluid by using a trained physical constraint discriminative model in which the physical constraint has been added, and
the trained physical constraint discriminative model has been trained by including the physical equation and/or the range of the feature value as the parameter in the intermediate layer provided in the trained regression model (L1).

8. The measurement device (1) according to claim 6, wherein the plurality of intermediate layers in each of which the physical equation and/or the range of the feature value has been added are provided in accordance with the physical equation and/or the range of the feature value.

9. The measurement device (1) according to claim 6, wherein the intermediate layer in which the physical equation and/or the range of the feature value is added performs an arithmetic operation on the physical constraint corresponding to the physical equation and/or the range of the feature value with respect to each of a liquid and gas.

10. The measurement device (1) according to claim 6, wherein the feature value is a limit value of dimensionless numbers including at least one of a Reynolds number, a Grashof number, a Mach number, a Schmidt number, a Strouhal number, a Froude number, an Eckart number, a Rossby number, and a friction coefficient.

11. The measurement device (1) according to claim 1, wherein the physical constraint is a physical equation related to force applied to vibrate a measurement tube of a Coriolis flowmeter.

12. The measurement device (1) according to claim 1, wherein the flow pattern includes a two-phase flow including an air bubble flow, a slug flow, a mist flow, an annular flow, and an annular mist flow, and includes a multiphase flow of fluids each having a different chemical property.

13. The measurement device (1) according to claim 1, wherein the processor further executes a process of performing correction by adding a difference between true value data obtained at the time of a training of the trained physical constraint regression model (L20) and a current output value to the current output value and outputting an obtained result.

14. The measurement device (1) according to claim 1, wherein the determining includes determining the flow pattern by using the trained discriminative model.

15. The measurement device (1) according to claim 1, wherein the trained physical constraint regression model (L20) is provided for each flow pattern to be determined.

16. The measurement device (1) according to claim 1, wherein the generating the trained physical constraint model (L3') includes generating the trained physical constraint model performed in an external device including a server that is provided in a cloud environment accessible by the measurement device.

17. The measurement device (1) according to claim 1, wherein a determination process for determining the flow pattern and/or a regression process performed by the trained physical constraint regression model is performed in an external device including a server that is provided in a cloud environment accessible by the measurement device.

18. A measurement program that causes a computer (30) to execute a process comprising:
generating (38) a trained physical constraint model that has been trained by adding a physical constraint related to a measurement of a measurement target fluid,
determining (35) a flow pattern of the measurement target fluid, and
performing (36) an arithmetic operation on an output value that corresponds to the determined flow pattern, that is related to the measurement target fluid, and that is obtained from a sensor value of the measurement device by using a trained physical constraint regression model (L20) that includes at least the trained physical constraint model (L3').

19. A measurement method by using a computer (30), the method comprising:
generating (38) a trained physical constraint model that has been trained by adding a physical constraint related to a measurement of a measurement target fluid,
determining (35) a flow pattern of the measurement target fluid, and
performing (36) an arithmetic operation on an output value that corresponds to the determined flow pattern, that is related to the measurement target fluid, and that is obtained from a sensor value of the measurement device by using a trained physical constraint regression model (L20) that includes at least the trained physical constraint model (L3').
